Europäisches Patentamt

European Patent Office

Office européen des brevets

(11) Veröffentlichungsnummer: **0 354 390**
**A1**

# (12) EUROPÄISCHE PATENTANMELDUNG

(21) Anmeldenummer: **89113226.8**

(22) Anmeldetag: **19.07.89**

(51) Int. Cl.⁴: **B01D 33/09 , B01D 33/74**

(30) Priorität: **28.07.88 DE 3825605**

(43) Veröffentlichungstag der Anmeldung:
**14.02.90 Patentblatt 90/07**

(84) Benannte Vertragsstaaten:
**ES GR**

(71) Anmelder: **Henkel Kommanditgesellschaft auf Aktien**
**Henkelstrasse 67**
**D-4000 Düsseldorf 13(DE)**

(72) Erfinder: **Küsgen, Rainer**
**Solinger Strasse 124**
**D-4018 Langenfeld(DE)**
Erfinder: **Bock, Karl**
**Heinrich-Köppler-Strasse 25**
**D-4000 Düsseldorf 13(DE)**

(54) **Trogförmige Filterplatte für Drehdruckfilter und Verfahren zum Herstellen einer solchen.**

(57) Die Erfindung betrifft eine trogförmige Filterplatte (1) für Drehdruckfilter mit einem Filtratrohr (2), einem am Plattenrand umlaufend dichtend befestigten Drahtgewebe (5) und einer außen umlaufenden Nut (3) zum Aufnehmen einer Dichtungsschnur. Um eine einfache Bespannung mit Drahtgewebe beliebig oft und kostengünstig zu ermöglichen, wird vorgeschlagen, daß die Ränder des Drahtgewebes außen um den Plattenrand herum in der umlaufenden Nut (3) einliegen und mittels der Dichtungsschnur (4) gegenüber der Filterplatte abgedichtet sind und daß das Drahtgewebe derart geformt ist, daß es an den Eckbereichen der Filterplatte dichtend anliegt.

EP 0 354 390 A1

Fig.1

## Trogförmige Filterplatte für Drehdruckfilter und Verfahren zum Herstellen einer solchen

Die Erfindung betrifft eine trogförmige Filterplatte für Drehdruckfilter mit einem Filtratrohr, einem am Plattenrand umlaufend dichtend befestigten Drahtgewebe und einer außen umlaufenden Nut zum Aufnehmen einer Dichtungsschnur.

Drehdruckfilter dienen zur kontinuierlichen Filtration von zu trennenden mehrphasigen Stoffgemischen. Ein derartiger Filter besteht aus einer rotierenden Filtertrommel, die in Filterzellen eingeteilt ist, und aus einem Filtergehäuse, das in mehrere druckdichte Kammern und eine drucklose Abnahmekammer unterteilt ist. Die einzelnen Filterzellen sind mit Filterplatten versehen, die mit verschiedenen Filtergeweben belegt sein können. In diesem Filtergewebe findet der eigentliche Filtrationsvorgang statt. Die in das Gehäuse unter Druck eingeleitete Trübe gelangt zu den Filterzellen, wo sich auf dem Filtergewebe ein Filterkuchen aus dem Feststoff aufbaut, durch den das Filtrat über Filtratrohre in das Trommel innere gelangt.

Je nach Beschaffenheit des zu trennenden Stoffgemisches werden unterschiedliche Filtergewebe benutzt. So ist es üblich, bei der Methylcellulose-Filtration mehrschichtige Spezialdrahtgewebe zu verwenden. Dabei werden die Filterplatten mit dem Spezialdrahtgewebe belegt und umlaufend allseitig verschweißt. Die auf Grund der sehr dünnen Drahtdurchmesser notwendige Plasmaschweißung ist äußerst schwierig und kostenintensiv. Soll nun eine Neubespannung der Filterplatte mit Filtergewebe durchgeführt werden, so ist es notwendig, das alte Gewebe durch Abfräsen von der Filterplatte zu trennen und die Filterplatte mit einem neuen Filtergewebe mit Hilfe einer erneuten Plasmaverschweißung zu versehen. Dieses Verfahren ist sehr kostenintensiv und außerdem nicht beliebig oft wiederholbar.

Der Erfindung liegt daher die Aufgabe zugrunde, eine trogförmige Filterplatte der eingangs genannten Art zu schaffen, welche eine einfache Bespannung mit Drahtgewebe beliebig oft und kostengünstig ermöglicht.

Diese Aufgabe wird erfindungsgemäß bei einer Filterplatte der eingangs genannten Art dadurch gelöst, daß die Ränder des Drahtgewebes außen um den Plattenrand herum in der umlaufenden Nut einliegen und mittels der Dichtungsschnur gegenüber der Filterplatte abgedichtet sind und daß das Drahtgewebe derart geformt ist, daß es an den Eckbereichen der Filterplatte dichtend anliegt, ohne daß die Eckbereiche miteinander verschweißt sind.

Bei dieser Erfindung wird ausgenutzt, daß sich ein Drahtgewebe in hohem Maße so stark verformen läßt, daß es sich auch einer stark gekrümmten Fläche eng anlegt. Daher kann durch einfaches Tiefziehen des Drahtgewebes ein trogförmiges Gewebe hergestellt werden, das auch in den Eckbereichen der Filterplatte gut an dieser anliegt. Gehalten wird das Drahtgewebe an der Filterplatte dadurch, daß die Ränder des Drahtgewebes in der umlaufenden Nut der Filterplatte einliegen und dort von der Dichtungsschnur an die Filterplatte gepreßt werden. Es ist damit weder ein umlaufendes allseitiges Verschweißen des Drahtgewebes mit der Filterplatte noch ein Verschweißen des Drahtgewebes in den Eckbereichen notwendig. Gerade dadurch, daß ein Drahtgewebe verwendet wird, entfällt die Notwendigkeit, an den Eckbereichen und Kanten des Drahtgewebes zu schweißen oder andere zusätzliche Maßnahmen zum Verbinden des Drahtgewebes in sich oder mit der Filterplatte vorzunehmen. Wie oben ausgeführt wurde, liegt dies letzten Endes an der leichten Anpaßbarkeit von Drahtgewebe an höchst unterschiedlich geformte und auch stark gekrümmte Oberflächen.

Um das Drahtgewebe auszuwechseln, muß lediglich die Dichtungsschnur entnommen und das Drahtgewebe von der Filterplatte abgezogen werden. Eine spanende Bearbeitung der Filterplatte, wie bei herkömmlicher allseitiger Verschweißung der Filterplatte, wobei das Drahtgewebe abgefräst worden ist, ist nicht notwendig.

Die Ränder der in der Nut einliegenden Eckbereiche des Drahtgewebes müssen ebenfalls abgedichtet sein. Dies kann durch Verschweißen oder sonstige Maßnahmen geschehen. Vorteilhaft ist jedoch, wenn die Ränder mindestens eines in der Nut einliegenden Eckbereiches des Drahtgewebes dichtend überlappen. Durch das Überlappen und den von der Dichtungsschnur auf die Ränder des Drahtgewebes ausgeübten Druck ist eine gute Abdichtung gewährleistet. Zusätzliche Maßnahmen sind daher in der vorteilhaften Ausgestaltung nicht notwendig.

Das Überlappen der Ränder kann erfindungsgemäß besonders leicht und vorteilhaft erreicht werden, wenn die in mindestens einem Eckbereich der Nut einliegenden Kantenabschnitte des Drahtgewebes eine zwischen den innerhalb dieses Eckbereichs einliegenden Kantenabschnitten angeordnete, mit dem Drahtgewebe einstückige Nase dichtend überlappen. Damit ist es nicht notwendig, zum Abdichten im Eckbereich zusätzliche Materialien zu verwenden, sondern es genügt eine Nase am Rande des Drahtgewebes. Dabei ist es insbesondere vorteilhaft, wenn die Nase aus dem gleichen Material wie das Drahtgewebe besteht. Damit kann schon beim Zuschneiden des Drahtgewebes eine solche Nase vorgesehen werden. Zusätzliche Arbeitsgänge sind zum Herstellen dieser eine besonders gute Abdichtung gewährleistenden Nase also nicht erforderlich.

Die Erfindung betrifft auch ein Verfahren zum Herstellen einer Filterplatte der eingangs genannten Art. Um die Herstellung der Filterplatte in möglichst wenigen Arbeitsgängen und in möglichst kurzer Zeit zu erreichen, wird vorgeschlagen, daß zunächst ein für die Filterplatte ausreichend großes Drahtgewebe zugeschnitten wird, daß die Eckbereiche des Drahtgewebes abgeschrägt werden, daß das Drahtgewebe an den Rändern gekantet wird, wobei der Abstand der Kantlinien von den Kanten des Drahtgewebes mindestens so groß wie die Höhe des Plattenrandes ist, daß die Ränder des Drahtgewebes in die Nut der Filterplatte eingezogen werden und daß die Dichtungsschnur in die Nut eingelegt wird. Es handelt sich beim Bespannen der Filterplatte also um drei Arbeitsgänge: Zunächst wird das Drahtgewebe auf eine spezielle Art zugeschnitten. Dann werden die Ränder des Drahtgewebes so umgeknickt, daß eine Art Trog entsteht. Dieses Umknicken kann vorteilhaft durch Tiefziehen geschehen. Die so vorbereiteten Drahtgewebe können vorteilhaft zum Drehdruckfilter transportiert werden und dort mit einer einfachen Vorrichtung auf die Filterplatten aufgespannt werden. Bei diesem Aufspannen brauchen nur noch die Ränder des trogförmigen Drahtgewebes in die der Filterplatte hineingedrückt werden und schließlich die Dichtungsschnur in die Nut eingelegt werden.

Es fallen überhaupt keine Schweißarbeiten oder sonstigen zusätzlichen Arbeiten neben den oben beschriebenen an, wenn mindestens ein Eckbereich des Drahtgewebes derart abgeschrägt wird, daß von den abgeschrägten Kantenabschnitten eine Nase nach außen ragt, deren über die Kantenabschnitte sich erstreckende Fläche ausreichend groß bemessen ist, so daß die Nase von den Kantenabschnitten in der fertigen Filterplatte dichtend überlappt wird. Mit Hilfe dieser Nase erreicht man, daß der durch die in der Nut einliegenden Abschrägungen gebildete Spalt dichtend abgedeckt wird.

Alle Formen dieser Nase sind möglich, bei denen dessen Zweck, den sich innerhalb des Eckbereiches zwischen den Abschrägungen bildende Spalt dichtend zu überdecken, erreicht wird.

Die Erfindung betrifft auch eine Vorrichtung zum Befestigen eines an den Rändern gekanteten Drahtgewebes an einer Filterplatte der eingangs genannten Art. Damit diese Vorrichtung leicht transportabel und leicht zu bedienen ist, so daß sie überall dort, wo Drehdruckfilter eingesetzt werden, benutzt werden kann, also an Ort und Stelle, wird vorgeschlagen, daß diese Vorrichtung eine Halteform aufweist, in der die Filterplatte mit dem darangelegten, angepaßten Drahtgewebe fest in ihrer Lage gehalten wird, an der an jeder der vier Seiten der Halteform mindestens ein Stempel mit einem dem Drahtgewebe zugewandten Vorsprung drehbar um eine zu der jeweiligen Seite parallele Achse ist, wobei sämtliche Vorsprünge einer Seite parallel zu dieser verlaufen, sich insgesamt über im wesentlichen die gesamte Länge der Seite erstrekken und in die Nut der Filterplatte eingreifbar sind, und daß diese Vorrichtung an den Stempeln befestigte Hebel zum Betätigen der Stempel aufweist. Mit dieser Vorrichtung ist es nicht mehr nötig, die Filterplatten zum Auswechseln des Drahtgewebes in einen entfernt liegenden Teil des Werkes zu transportieren oder zu der Herstellerfirma einzuschicken, sondern das Neubespannen der Filterplatte kann gleich und schnell an Ort und Stelle vorgenommen werden.

Ein Ausführungsbeispiel der Erfindung ist in den Zeichnungen dargestellt und wird im folgenden näher beschrieben. Es zeigen:

Figur : In einem Teilschnitt eine mit einem Drahtgewebe bespannte Filterplatte,

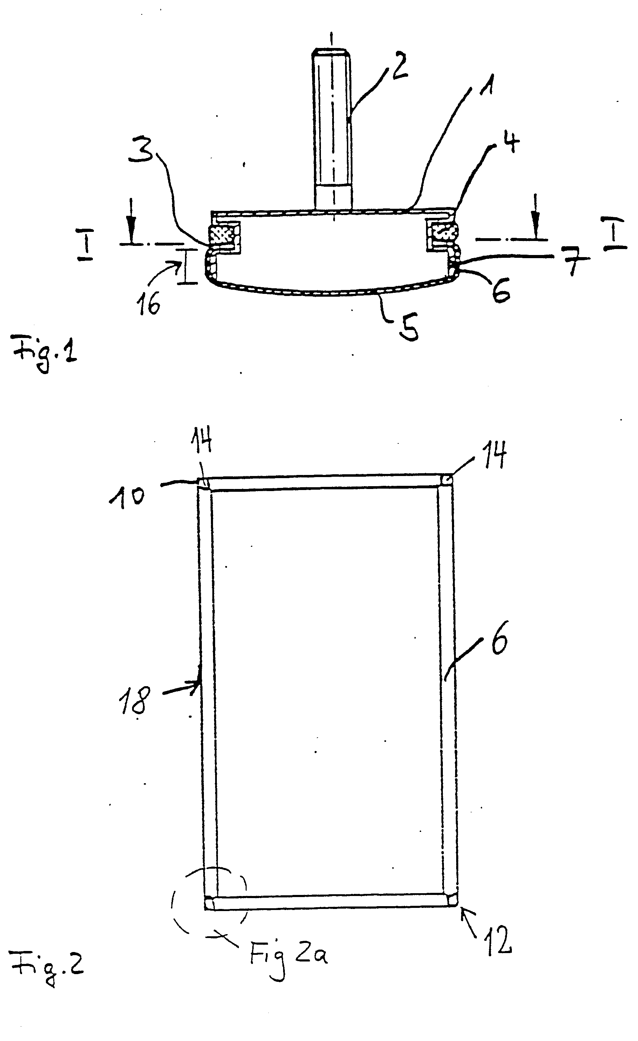

Figur 2: Eine Ansicht gemäß der Linie I-I in Figur 1,

Figur 2a: Einen vergrößerten Ausschnitt aus Figur 2,

Figur 3: Ein zugeschnittenes Drahtgewebe vor dem Bespannen,

Figur 4: Den vorletzten Arbeitsgang beim Bespannen der Filterplatte,

Figur 5: Ein Querschnitt der erfindungsgemäßen Vorrichtung zum Befestigen eines Drahtgewebes an der Filterplatte entlang der Linie II-II in Figur 6 und

Figur 6: Eine perspektivische Draufsicht auf die Vorrichtung nach Figur 5.

Eine Filterplatte (1) einer in der Zeichnung nicht dargestellten Filterzelle eines Drehdrucktrommelfilters weist ein Filtratrohr (2) und eine außen umlaufende Nut (3) zur Aufnahme einer Dichtungsschnur (4) für die Abdichtung gegenüber benachbarten Teilen, wie anderen Filterplatten oder Stützrahmen, auf. Die Filterplatte (1) ist mit einem mehrlagigem Drahtgewebe (5) bespannt. Dabei sind die Ränder (6) des Drahtgewebes (5) um den Plattenrand (7) der Filterplatte (1) in die Nut (3) herumgelegt.

Die Filterplatte (1) wird folgendermaßen bespannt:

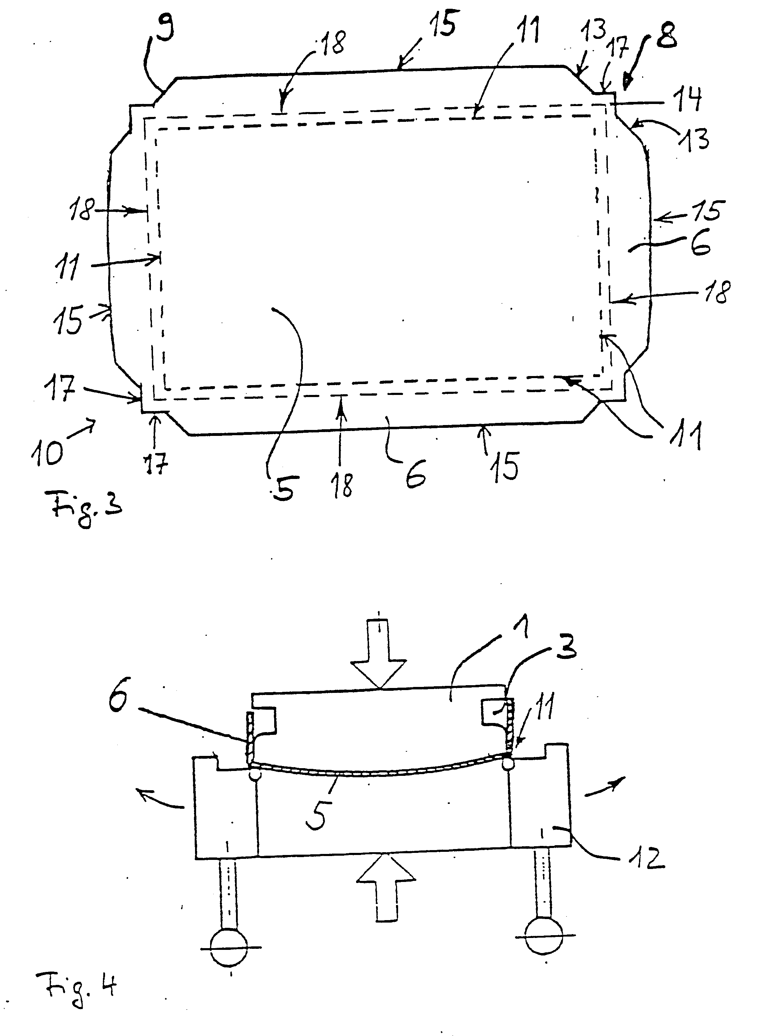

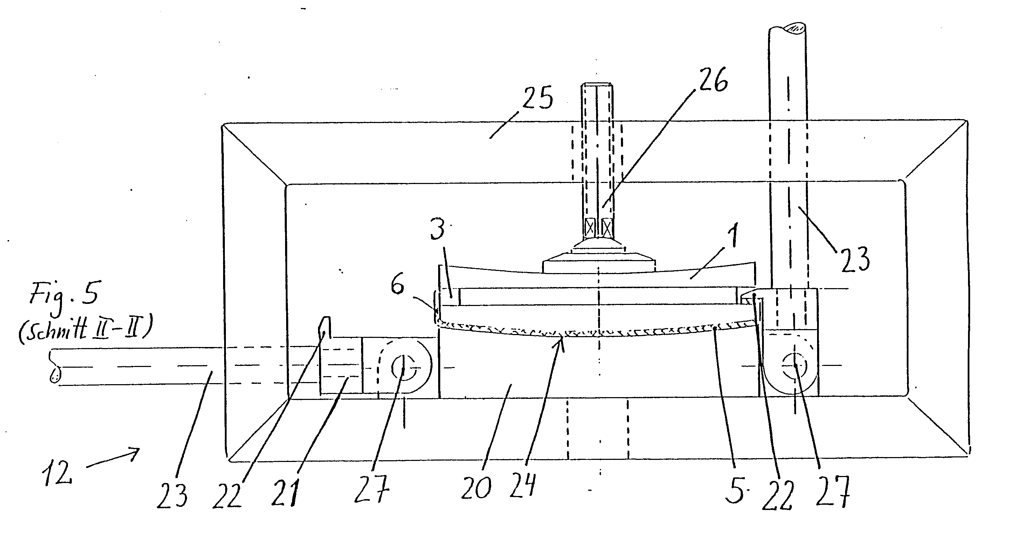

Wie aus Figur 3 ersichtlich ist, wird das Drahtgewebe (5) zunächst zugeschnitten. Es werden zunächst die Kanten (15) des Drahtgewebes geschnitten, die so gewählt worden sind, daß diese Kanten (15) in die Nut (3) genügend tief hineingezogen werden können. Die in Figur 3 linken und rechten Kanten (15) sind so weit nach außen gekrümmt, daß sie beim Einliegen in der Nut (3) parallel zu deren Kanten verlaufen. Die Krümmung der Kanten (15) ist erforderlich, weil, wie aus Figur 4 ersichtlich, die Hauptfläche der mit dem Drahtgewebe bespannten Filterplatte gekrümmt ist (siehe Bezugszeichen 5 in Figur 4) Dann werden die Ecken des so erhaltenen Rechtecks zugeschnitten. Die Eckbereiche (10) werden zu 45°-Abschrägungen (9) geschnitten. Diese Abschrägungen (9) erstrecken sich jedoch nicht über den gesamten Eckbereich, sondern nur auf den äußeren Teil jedes Eckbereichs. Denn beim Zuschneiden der Eckbereiche wird darauf geachtet, daß ein Drahtgewebestück von dem Form eines Rechtecks ohne abgeschrägten Ecken erhalten bleibt. Diese Kanten (18) sind diejenigen, um die die Ränder des Drahtgewebes im vorletzten Schritt gebogen werden, um die Ränder in die Nut (3) hineinzuziehen, bzw. zu drücken.

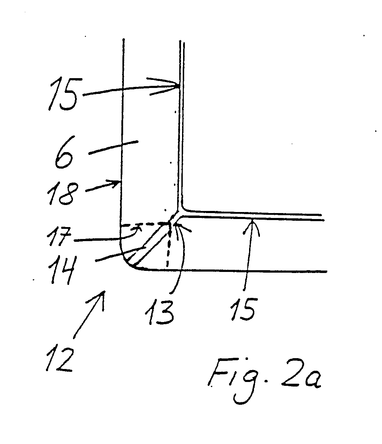

Anschließend wird das Drahtgewebe an den Kantlinien (11) gekantet. Wegen der Drahtgewebestruktur passen sich bei diesen Kanten die Eckbereiche (10) der neuen geometrischen Form an, ohne zu reißen oder zu knittern. Dieses so erhaltene trogförmige Drahtgewebe (5) wird im folgenden Schritt über die Filterplatte (1) gestülpt. Mit einer Umbördelvorrichtung (12) wird das Drahtgewebe (5) faltenfrei in die Nut (3) hineingedrückt. Die Kanten (13) der Abschrägung (9) jeweils eines Eckbereiches (10) stoßen in dieser Lage aneinander und bilden einen Spalt, der von der Nase (14) überdeckt wird, wie besonders deutlich in Figur 2a gezeigt ist. Ein zusätzliches Verbinden der Kanten (13) der Abschrägungen (9), z. B. durch Verschweißen, ist daher nicht notwendig.

Abschließend wird in die Nut (3) die Dichtungsschnur (4) eingelegt. Die Dichtungsschnur (4) sorgt damit einerseits für eine Abdichtung zwischen der Filterplatte (1) und benachbarten Teilen und andererseits für eine Dichtung zwischen der Filterplatte (1) und dem Drahtgewebe (5). Die durch das Tiefziehen, wodurch sich die Kanten (11) gebildet haben, und das Umkanten der Kantlinien (18) gebildeten Eckbereiche sind vollständig abgedichtet, so daß eine zusätzliche Verbindung nicht notwendig ist.

Soll nun das Drahtgewebe (5) ausgewechselt werden, so muß lediglich die Dichtungsschnur (4) aus der Nut (3) entnommen und das Drahtgewebe (5) von der Filterplatte (1) abgezogen werden.

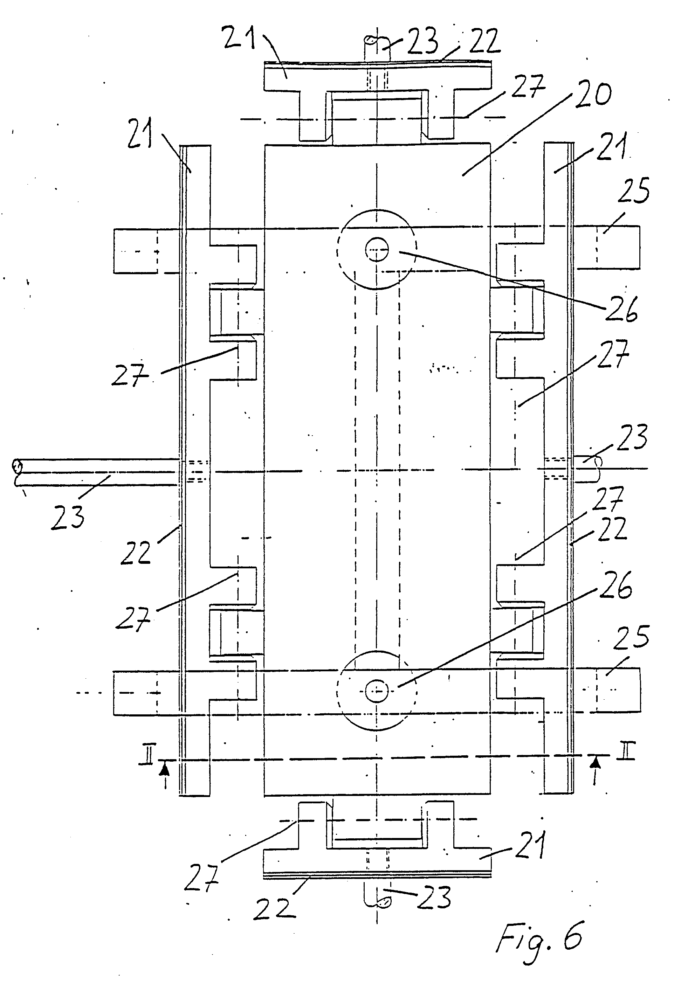

Die erfindungsgemäße Vorrichtung zum Befestigen eines an den Rändern gekanteten Drahtgewebes an einer Filterplatte, die auch Umbördelvorrichtung genannt wird, ist in den Figuren 5 und 6 dargestellt. Die Filterplatte (1) liegt auf einer Halteform (20), deren Auflagefläche (24) der gekrümmten Oberfläche der Filterplatte (1) angepaßt ist. Die Filterpatte (1) ist mittels zweier an jeweils einem Rahmen (25) abgestützten Schraubzwingen (26) fest an die Halteform (20) gepresst. Zwischen der Filterplatte (19) und der Halteform (20) liegt das Drahtgewebe (5). An jeder der vier Seiten der Filterplatte (1) ist jeweils ein Stempel (21) drehbar um eine zur jeweiligen Seite der Filterplatte (1) parallele Achse (27) angeordnet. Diese Stempel (21) tragen an ihrer zur Filterplatte (1) gewandten Seite einen über die gesamte Länge dieser Seite sich erstreckenden Vorsprung (22), der so angeordnet ist, daß er bei Drehen des Stempels (21) in die zugehörige Nut (3) der Filterplatte eingreift. Durch dieses Eingreifen wird der Rand (6) des Drahtgewebes in die Nut (3) der Filterplatte (1) gedrückt. Zum Betätigen der Stempel (21) ist jeweils ein Hebel (23) vorgesehen.

Die Filterplatte (1) wird folgendermaßen mit dem Drahtgewebe (5) bespannt. Das trogförmige Drahtgewebe (5) wird über die Filterplatte (1) gestülpt und diese auf die Halteform (20) gelegt und dort mit den beiden Schraubzwingen (26) festgeklemmt. Dann werden die vier Hebel (23) aus der waagerechten in die senkrechte Lage gedrückt, wodurch die Ränder (6) des Drahtgewebes (5) in die Nut (3) der Filterplatte (1) gepresst werden. Danach werden die Hebel (23) wieder in die waagerechte Lage bewegt, die Schraubzwingen (26) gelockert und die Filterplatte (1) mit dem daran befestigten Drahtgewebe (5) aus der Vorrichtung (12) entfernt.

## Ansprüche

1. Trogförmige Filterplatte für Drehdruckfilter mit einem Filtratrohr (2), einem am Plattenrand (7) umlaufend dichtend befestigtem Drahtgewebe (5) und einer außen umlaufenden Nut (3) zum Aufnehmen einer Dichtungsschnur (4), dadurch gekennzeichnet, daß die Ränder (6) des Drahtgewebes (5) außen um den Plattenrand (7) herum in der umlaufenden Nut (3) einliegen und mittels der Dichtungsschnur (4) gegenüber der Filterplatte (1) abgedichtet sind und daß das Drahtgewebe (5) derart geformt ist, daß es an den Eckbereichen (12) der Filterplatte (1) dichtend anliegt, ohne daß die Eckbereiche miteinander verschweißt sind.

2. Filterplatte nach Anspruch 1, dadurch gekennzeichnet, daß die Ränder (6) mindestens eines in der Nut (3) einliegenden Eckbereiches (10) des Drahtgewebes (5) dichtend überlappen.

3. Filterplatte nach Anspruch 2, dadurch gekennzeichnet, daß die in mindestens einem Eckbereich (12) der Nut (3) einliegenden Kantenabschnitte (13) des Drahtgewebes (5) eine zwischen den innerhalb dieses Eckbereichs (12) einliegenden Kantenabschnitten (13) angeordnete, mit dem Drahtgewebe (5) einstückige Nase (14) dichtend überlappen.

4. Filterplatte nach Anspruch 3, dadurch gekennzeichnet, daß die Nase (14) aus dem gleichen Material wie das Drahtgewebe (5) besteht.

5. Verfahren zum Herstellen einer Filterplatte nach einem der Ansprüche 1 bis 4, dadurch gekennzeichnet, daß zunächst ein für die Filterplatte (1) ausreichend großes Drahtgewebe (5) zugeschnitten wird, daß die Eckbereiche (10) des Drahtgewebes (5) abgeschrägt werden, daß das Drahtgewebe (5) an den Rändern (6) gekantet wird, wobei der Abstand der Kantlinien (11) von den Kanten (13, 15) des Drahtgewebes mindestens so groß wie die Höhe (16) des Plattenrandes (7) ist, daß die Ränder (6) des Drahtgewebes (5) in die Nut (3) der Filterplatte (1) eingezogen werden und daß die Dichtungsschnur (4) in die Nut (3) eingelegt wird.

6. Verfahren nach Anspruch 5, dadurch gekennzeichnet, daß mindestens ein Eckbereich (10) des Drahtgewebes (5) derart abgeschrägt wird, daß von den abgeschrägten Kantenabschnitten (13) eine Nase (14) nach außen ragt, deren über die Kantenabschnitte (13) sich erstreckende Fläche ausreichend groß bemessen ist, so daß die Nase (14) von den Kantenabschnitten (13) in der fertigen Filterplatte (1) dichtend überlappt wird.

7. Vorrichtung zum Befestigen eines an den Rändern (6) gekanteten Drahtgewebes (5) an einer Filterplatte (1) nach einem der Ansprüche 1 bis 4, gekennzeichnet durch eine Halteform (20), in der die Filterplatte (1) mit dem daran angelegten, angepaßten Drahtgewebe (5) fest in ihrer Lage gehalten wird, an der an jeder der vier Seiten der Halteform (20) mindestens ein Stempel (21) mit einem dem Drahtgewebe (5) zugewandten Vorsprung (22) drehbar um eine zu der jeweiligen Seite parallele Achse ist, wobei sämtliche Vorsprünge (22) einer Seite parallel zu dieser verlaufen, sich insgesamt über im wesentlichen die gesamte Länge der Seite erstrecken und in die Nut (3) der Filterplatte (1) eingreifbar sind, und durch an den Stempeln (21) befestigte Hebel (23) zum Betätigen der Stempel (21).

D 8379 EP

Fig.1

Fig.2

Fig 2a

15

6

18

17

14

12

13

15

Fig. 2a

Fig. 3

Fig. 4

D 8379 EP

EP 0 354 390 A1

Fig. 5
(Schnitt II-II)

12

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,P | DE-C-3 732 188  (HENKEL KGaA)<br>* Insgesamt *<br>--- | 1-7 | B 01 D  33/09<br>B 01 D  33/74 |
| A | DE-U-8 802 298  (A. KÄRCHER GmbH & CO.)<br>* Seite 5, Absatz; Seite 8, Absätze 2.3; Seite 18, Absatz 1, Anspruch 1; Figur *<br>--- | 1-4 | |
| A | US-A-2 628 721  (V.P. MATHEWS)<br>* Spalte 2, Zeilen 14-47; Figur 4 *<br>--- | 1,5,7 | |
| A | US-A-2 454 134  (A.L. BURLESON)<br>* Spalte 7, Zeilen 18-37; Figuren 21-23 *<br><br>----- | 1-4 | |

RECHERCHIERTE
SACHGEBIETE (Int. Cl.5)

B 01 D

Der vorliegende Recherchenbericht wurde für alle Patentansprüche erstellt

| Recherchenort | Abschlußdatum der Recherche | Prüfer |
|---|---|---|
| DEN HAAG | 23-10-1989 | MARZENKE J. |

EPO FORM 1503 03.82 (P0403)